(19) Europäisches Patentamt / European Patent Office / Office européen des brevets

(11) **EP 2 953 284 A1**

(12) **EUROPEAN PATENT APPLICATION**

(43) Date of publication:
**09.12.2015 Bulletin 2015/50**

(51) Int Cl.:
*H04L 1/00* <sup>(2006.01)</sup>   *H04L 27/04* <sup>(2006.01)</sup>
*H04L 27/36* <sup>(2006.01)</sup>   *H04L 27/34* <sup>(2006.01)</sup>
*H04L 5/04* <sup>(2006.01)</sup>   *H04L 5/12* <sup>(2006.01)</sup>
*H04L 25/49* <sup>(2006.01)</sup>   *H04W 52/00* <sup>(2009.01)</sup>

(21) Application number: **14305863.4**

(22) Date of filing: **06.06.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Alcatel Lucent
92100 Boulogne-Billancourt (FR)**

(72) Inventors:
• **Wild, Thorsten
70435 Stuttgart (DE)**
• **Chen, Yejian
70435 Stuttgart (DE)**
• **Schaich, Frank
70435 Stuttgart (DE)**

(74) Representative: **Therias, Philippe
Alcatel-Lucent International
148/152 route de la Reine
92100 Boulogne-Billancourt (FR)**

(54) **Transmission method, network device, base station, user device and computer-readable medium**

(57)    A transmission method, network device, base station, user device and computer readable medium of at least two data streams composed of coded symbols. The method comprises a step of interleaving, using different interleavers for each data stream, coded symbols of at least two data streams, and a step of multiplying, the coded symbols of at least two of the interleaved data streams with a complex number different for each data stream. The said step of multiplying is realized after the said step of interleaving.

Figure 4

**Description**

FIELD OF INVENTION

The present subject matter relates to the transmission of user data over wireless networks and, particularly but not exclusively, to the separation of different layers of data using Interleave-Division Multiple Access (IDMA). These different layers of data may be associated to a plurality of different users.

BACKGROUND

Interleave-Division Multiple Access (IDMA) is recently recognized as a potential Physical Layer (PHY) solution for wireless communications. As a Multiple Access (MA) scheme to support multiuser detection, IDMA is capable of detecting and decoding multiple user signals with a single receive antenna. IDMA is also capable of detecting and decoding multiple data streams associated to a unique user. In this present document the man ordinary skilled in the art will easily understand that the object of the present subject matter wan be used to send data streams of different users or to send data streams of a single user. So the expressions "data streams of different users" and "date streams of a single user" can be used one for the other. In this document these different data streams are also called layers. In IDMA the interleavers are used as the only means for doing the separation between these different layers, supported by the introduced redundancy of the Forward Error Correction (FEC). Each layer uses a different interleaver and the receiver uses the knowledge of the interleaver used by each layer to separate the data send on each layer. Hence, it can support some waveform solutions, for example Filter Bank Multi-Carrier (FBMC), in which Multiple-Input Multiple-Output (MIMO) technique cannot straightforwardly be supported to realize multiuser detection. IDMA can also jointly work with other waveforms for example Universal Filtered Multi-Carrier (UFMC) or cyclic prefix orthogonal frequency division multiplexing (CP-OFDM). This jointly work allow the support of asynchronous traffic, for example when using Machine Type Communications (MTC).

SUMMARY

This summary is provided to introduce concepts related to the transmission of data over wireless network.

In one implementation, a transmission method is proposed. This method comprises a step of interleaving, using different interleavers for each data stream, coded symbols of at least two data streams, and a step of multiplying, the coded symbols of at least two of the interleaved data streams with a complex number different for each data stream. The said step of multiplying is realized after the said step of interleaving.

In another implementation a network device is described. This network device comprises at least one processor; and at least one memory coupled to the processor. The memory comprises an interleaving module configured to interleaved coded symbols of at least two data streams, a multiplication module configured to multiply the coded symbols of at least two of the interleaved data streams with a complex different to each the data streams, and a summation module configured to sum together the multiply coded symbols of at least two data streams.

In another implementation a base station is described. The base station comprises at least one processor; and at least one memory coupled to the processor. The memory comprises an interleaving module configured to interleaved coded symbols of at least two data streams, a multiplication module configured to multiply the coded symbols of at least two of the interleaved data streams with a complex number different for each data streams, and a summation module configured to sum together the multiply coded symbols of at least two data streams.

In another implementation a user device is described. The user device comprises at least one processor; and at least one memory coupled to the processor. The memory comprises an interleaving module configured to interleaved coded symbols of a data streams and a multiplication module configured to multiply the coded symbols of the interleaved data streams with a complex number different for each data streams.

In another implementation a computer readable medium is described. The computer-readable medium has embodied thereon a computer program for executing a method for transmission. The method comprises a step of interleaving coded symbols of at least two data streams, and a step of multiplying; the coded symbols of at least two of the interleaved data streams of coded symbols with a complex number different for each data streams.

In another implementation a computer-readable medium is described. This computer-readable medium has embodied thereon a computer program for executing a method for.

BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:

Figure 1 illustrates an exemplary IDMA system.

Figure 2 illustrates a first exemplary of the transmission method.

Figure 3 illustrates a second exemplary of the transmission method.

Figure 4 illustrates an exemplary use of the transmission method.

Figure 5 illustrates a third exemplary of the transmission method.

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

DESCRIPTION OF EMBODIMENTS

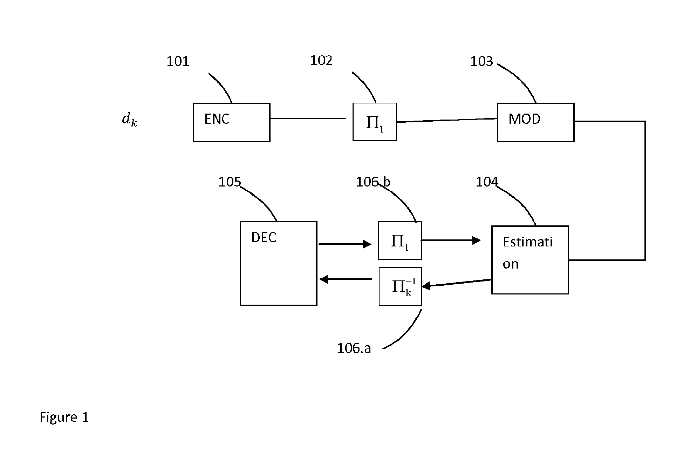

The figure 1 illustrates an exemplary IDMA system. The upper part of the figure 1 represents the transmitter structure of the multiple access schemes under consideration with $K$ different layers. In an embodiment these with $K$ different layers represents $K$ simultaneous users. In another embodiment these $K$ different layers represents different data streams belonging to the same user. The input data sequence $d_k$ of layer k is firstly encoded by the module 101. The coded data are then permutated by an interleaver module 102. Layers are solely distinguished by their interleaver, hence the name interleave-division multiple-access (IDMA). The key principle of IDMA is that the interleavers should be different for different layers. It is assumed that the interleavers are generated independently and randomly. These interleavers disperse the coded data so that the adjacent transmitted symbols are approximately uncorrelated, which facilitates the reception of the data. After this interleaving the data are modulated using a modulator module 103, for example an M-QAM modulator can be used; however other types of modulator can be used. In an IDMA system any digital modulators are usable, as long as they are able to deliver soft-output to the channel decoder.

The down part of the figure 1 represents the receiver structure. The receiver comprises a module 104 configured to estimate a likelihood of coded received data of each layer based on the received signal. One of the aim of this module is to separate the coded data sent by the different layers. The receiver also comprise a module 105 configured to decode the received user data and to estimate a likelihood of the estimated coded user data using the likelihood of coded received data received from the module 104. Between these two modules is placed a deinterleaver module 106.a and an interleaver module 106.b. The two modules 104 105 exchange, through the interleaver and deinterleaver, information representing the likelihood of the coded received data. In an embodiment of the present subject matter these information can be for example extrinsic log-likelihood ratios (LLRs) represented using the following equation:

$$e\big(x_k(j)\big) = \log\left(\frac{p(\boldsymbol{y}|x_k(j) = +1)}{p(\boldsymbol{y}|x_k(j) = -1)}\right)$$

In this equation $x_k(j)$ represent the coded data number j of the layer $k$, $e(x_k(j))$ represent the LLR associated to $x_k(j)$, $p(y|x_k(j) = +1)$ represent the probability of $x_k(j) = +1$, given the received signal $\boldsymbol{y}$.

The addressed technical problem in the method of the present subject matter is to provide a high performance solution when a single user transmits multiple IDMA layers or when several users transmit one IDMA layer or when a single user transmits different data streams to different other users. There are several reasons for the need of this multi-layer transmission:

Simplicity of the transmit chain, e.g. construct the signal from several instances of the same modulation scheme.

The supported modulation alphabet size restricts the achievable throughput, while the signal-to-interference-plus-noise-ratio (SINR) of the radio channel would support even more bits per symbol.

Properties of the waveform prefer a restricted modulation alphabet, but the SINR conditions of the radio channel support a high rate

IDMA with multiple layers also has to work under line-of-sight conditions (LOS), in an AWGN channel or frequency flat channel. Those channel types are a very problematic case for IDMA. Here, an IDMA system as presented in figure 1 is dysfunctional, because the key functionality provided by the interleavers (i.e. introducing independency between the different symbol streams) is hampered.

The system presented in figure 1 may have these drawbacks in the following situation. A user in (near) frequency flat channel conditions (e.g. line-of sight (LOS) conditions) wants to transmit two BPSK layers. While both layers may use independent interleavers, the channel is flat, so the complex channel coefficients are identical for both layers. For the BPSK constellation the resulting superimposed symbols at the receive side, after equalization are -2, 0 and +2 (in the absence of noise). The resulting symbol constellations are ambiguous for the 0 symbol case. One layer has transmitted a +1, the other a -1, but which layer transmits which symbol is unknown.

In an embodiment a strong channel coding helps to be potentially able to receive the coded blocks of the two layers error free, but the transmission contains unnecessary problematic self-interference, due to lack of symbol constellation unambiguousness. Another drawback of this solution is to have a lower data rate than a solution with a less strong channel coding.

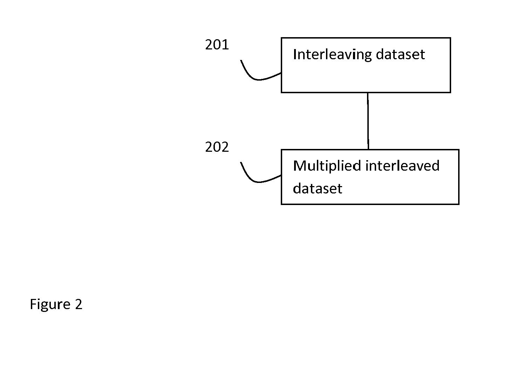

The figure 2 presents a transmission method object of an embodiment of the present subject matter. This transmission method allows the transmission of at least two data streams. This transmission method comprises:

a step 201 of interleaving, using different interleavers for each data stream, coded symbols of at least two data streams and
a step 202 of multiplying, the coded symbols of at least two of the interleaved data streams with a complex number different for each data stream. These complex numbers can also be called weights.

The step 202 of multiplying is realized after the step 201 of interleaving.

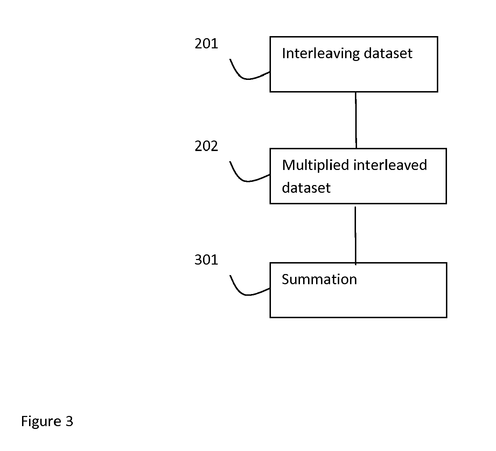

In an embodiment, presented figure 3, the method also comprises a step 301 of summing together the multiplying coded symbols of at least two interleaved data streams. This embodiment can be used for example when a single network device for example a base station sends different data to different users. The symbols obtain after the step of summing are called hyper-alphabet.

In another words in this embodiment, we propose the design of a joint hyper-alphabet of the superimposed IDMA layers. By particular weighted additions of multiple layers, ambiguous symbol constellations are avoided and the efficient multi-user receiver is supported with better performance for interference cancellation. In this embodiment, even when not all signal layers can be decoded, it is likely to be successful in the first layer due to these unequal weightings.

This method is different of a method to realize a 16 QAM constellation. Indeed in a regular 16-QAM constellation, the data bits are jointly encoded, interleaved and mapped to the 16 QAM-modulation alphabet, e.g. via Gray mapping. In the method object of the present subject matter, two independent streams of data bits are separately encoded (e.g. with different possible code rates), interleaved with different interleavers and mapped separately to two independent QPSK constellations. Due to the weighting factors, the resulting hyper-alphabet of the superimposed modulated symbols has as well the shape of the 16-QAM constellation (which is advantageous in terms of Euclidean distance), but consisting of different separate encoding mechanisms. This offers additional degrees of freedom in system design.

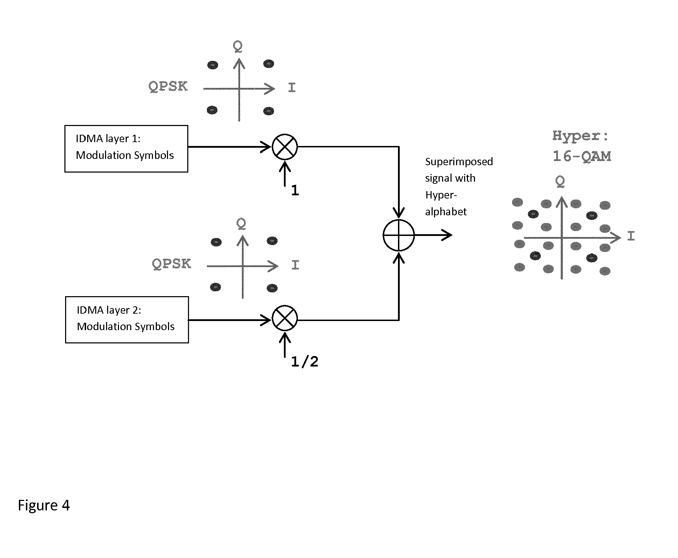

The figure 4 illustrates a simple basic example for construction of the superimposed hyper-alphabet of modulation symbols in the case of a 2-layer QPSK transmission. The resulting hyper-constellation is illustrated on the right side in red, while the blue dots represent the original constellation of layer 1. The superposition of the layer 2 constellation does not change the quadrant in the complex plane of the layer 1 symbols and effectively results in a 16-QAM constellation, where all the ambiguity (which would be caused by conventional IDMA) is fully removed and symbol detection can happen distinctly.

In other words, in its generic form the method present of the present subject matter provides a complex multiplication of layers with different coefficients, impacting amplitude and phase in order to achieve advantageous constellations of the superimposed signals of different layers.

The phase factor generates a constellation rotation and thus can tweak as well the Euclidean distance.

Two example designs are explained below for designing M-QAM and M-ASK hyper alphabets, respectively.

In the first example an M-QAM hyper-alphabet is generated from QPSK modulated layers. The first layer is weighted with one, the second with 1/2, the third with 1/4 etc. In this situation a superposition of two layers results effectively in a 16-QAM constellation. An appropriate receiver, using a soft-interference cancellation approach, based on log-likelihood values, can now start the decoding process with the first layer which has 3 dB more power, improving the chance of successful decoding. The quadrant in the complex plane where the symbol is located after equalization is still unchanged, compared to single layer IDMA QPSK transmission of the first layer illustrated by figure 1 If the first layer transmits the QPSK located in the top right quadrant, the superposition of first and second layers are still located in the top right quadrant, a fact which supports the decoding process. When the first layer is cancelled out successfully, the second layer can be handled.

A superposition of three layers results effectively in a 64-QAM constellation. Again the decoder can start with the first layer which has higher reliability than the other layers etc.

In the second example an M-ASK hyper-alphabet is generated form BPSK modulated layers. In this case the first layer is weighted with one the second with ½ the third with ¼ etc. In this example a superposition of two layers results effectively in a 4-ASK constellation. The elementary signal estimator (ESE) receiver, using a soft-interference cancellation approach, based on log-likelihood values, can now start the decoding process with the first layer which has 3 dB more power, improving the chance of successful decoding. The half plane in the complex field where the symbol is located after equalization is still unchanged, compared to single layer ASK transmission. When the first layer is cancelled out successfully, the second layer can be handled. The superposition of three layers results in an 8-ASK constellation. Again the decoder can start with the first layer which has higher reliability than the other layers etc.

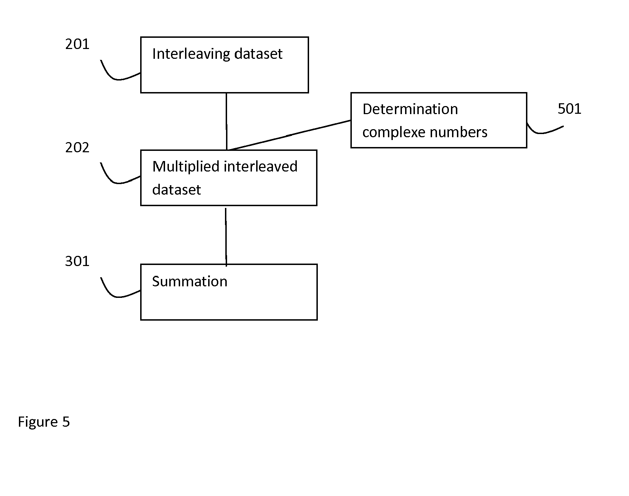

In an embodiment illustrated by figure 5 the method object of the present subject matter also comprises a step 501 of determining the said complex numbers. Different embodiment can be used to determine these complex numbers.

In a first embodiment the step 501 of determining the said complex numbers is realized by maximizing the Euclidean distance between the multiplied coded symbols.

In a second embodiment the step 501 of determining the said complex number is realized by using a model of a propagation channel between a transmitter and a receiver. The transmitter implements the method object of the present subject matter and the receiver is one of the destinations of the data streams. In order to do this determination a single channel complex tap per resource element can be used. This channel can be pre-equalized within the transmitter.

In this second embodiment and if multiple users are present in the uplink, the propagation channels are flat fading channels and the base station has knowledge of these propagation channels (from previous uplink transmissions or by channel sounding), then the base station informs the users on complex coefficients. These complex coefficients shall be used by the user device for multiplying (thus precoding, even with a single antenna element) their modulation constellation. The aim of these multiplications is to achieve advantageous constellations which are as unambiguous as possible. For example with two QPSK users in the uplink, each using one IDMA layer: If the flat fading uplink channel coefficient of the first user is 1+0*j, while for the second user it is 0+0.6*j, the base station signals to second user the information that it shall multiply its modulation symbols by 1.2*j (or alternatively -1.2*j), as the superimposed result finally is a 16-QAM constellation, which is preferable from the perspective of Euclidean distance.

In a third embodiment the step 501 of determining the said complex numbers is realized by using the following formula (assuming that equal modulation order sizes are used per layer):

$$w_L = 1/2^{L-1}$$

Within this above equation $W_L$ is the weight per layer, $L$ is the layer index ($L = [1,2,3 ..., L_{max}]$) and $L_{max}$ is the number of layers.

In this case the respective modulation order of the hyper-alphabet is obtained with the formula $M = \prod_1^{L_{max}} x_i$. Where $x_i$ is the modulation order of the base modulation of $i$-th layer (e.g. $x_i = 4$ with QPSK, $x_i = 2$ with BPSK ...)

The respective number of bits carried per modulation symbol of the hyper alphabet is obtained with the formula $M' = \prod_1^{L_{max}} y_i$. Where $y_i$ is the number of bits per modulation symbol of the base modulation of $i$-th layer (e.g. $y_i = 2$ with QPSK, $y_i = 1$ with BPSK...)

An embodiment of the present subject matter comprises a network device. This network device includes one or more processor(s), I/O interface(s), and a memory coupled to the processor(s). The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

The functions realized by the processor may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

The modules, included inside the memory, comprise a interleaving module configured to interleaved coded symbols of at least two data streams,

a multiplication module configured to multiply the coded symbols of at least two of the interleaved data streams of coded symbols with an complex number different for each data streams, and

a summation module configured to sum together the multiply coded symbols of at least two data streams.

In an embodiment the network device is a base station. This base station includes one or more processor(s), I/O interface(s), and a memory coupled to the processor(s). The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

As previously explains, the functions realized by the processors may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

As previously explains, the memories may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

The memory of the base station comprises a interleaving module configured to interleaved coded symbols of at least two data streams,

a multiplication module configured to multiply the coded symbols of at least two of the interleaved data streams of coded symbols with an complex number different for each data streams, and

a summation module configured to sum together the multiply coded symbols of at least two data streams.

Another embodiment comprises a user device. This user device includes one or more processor(s), I/O interface(s), and a memory coupled to the processor(s). The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

As previously explains, the functions realized by the processors may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

As previously explains, the memories may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

The memory of the user device comprises a interleaving module configured to interleaved coded symbols of at least two data streams,

a multiplication module configured to multiply the coded symbols of at least two of the interleaved data streams of coded symbols with a complex number different for each data streams.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

In an embodiment of the subject matter, the method for transmission described figure 2 can be performed by programmed computers. The method comprises a step 201 of interleaving coded symbols of at least two data streams, and a step 202 of multiplying; the coded symbols of at least two of the interleaved data streams of coded symbols with a complex number associated to the data streams.

**Claims**

1.  A transmission method of at least two data streams composed of coded symbols, the method comprising;
    a step (201) of interleaving, using different interleavers for each data stream, coded symbols of at least two data streams,
    a step (202) of multiplying, the coded symbols of at least two of the interleaved data streams with a complex number different for each data stream,
    the said step (202) of multiplying being realized after the said step (201) of interleaving.

2.  The transmission method according to claim 1 also comprising:

    a step (301) of summing together the multiply coded symbols of at least two interleaved data stream.

3.  The transmission method according to claim 1 or 2 also comprising;
    a step (501) of determining the said complex number by maximizing the Euclidean distance between the multiplied coded symbols.

4.  The transmission method according to claim 1 or 2 also comprising;
    a step (501) of determining the said complex number using a model of a propagation channel between a transmitter and a receiver.

5.  The transmission method according to claim 1 or 2 also comprising;
    a step (501) of determining the said complex number using the following formula:

$$w_L = 1/2^{L-1}$$

where $W_L$ is the said complex number, L is an index of the data stream.

6.  The transmission method according to any of the previous claims wherein the step of (201) interleaving and/or the step (202) of multiplying are realized by at least two different user devices.

7.  The transmission method according to any of the previous claims wherein the step (201) of interleaving and/or the step (202) of multiplying and/or the step (301) of summing are realized by the same network device and/or user device.

8.  A network device comprising
    at least one processor; and
    at least one memory coupled to the processor, the memory comprises:

    an interleaving module configured to interleaved coded symbols of at least two data streams,
    a multiplication module configured to multiply the coded symbols of at least two of the interleaved data streams with a complex different to each the data streams,
    a summation module configured to sum together the multiply coded symbols of at least two data streams.

9.  A base station comprising;
    at least one processor; and
    at least one memory coupled to the processor, the memory comprises:

    an interleaving module configured to interleaved coded symbols of at least two data streams,
    a multiplication module configured to multiply the coded symbols of at least two of the interleaved data streams with a complex number different for each data streams,
    a summation module configured to sum together the multiply coded symbols of at least two data streams.

10. A user device comprising
    at least one processor; and
    at least one memory coupled to the processor, the memory comprises:

    an interleaving module configured to interleaved coded symbols of a data streams,
    a multiplication module configured to multiply the coded symbols of the interleaved data streams with a complex number different for each data streams.

11. A computer-readable medium having embodied thereon a computer program for executing a method for transmission, the method comprises;
a step (201) of interleaving coded symbols of at least two data streams,
a step (202) of multiplying; the coded symbols of at least two of the interleaved data streams of coded symbols with a complex number different for each data streams.

12. The computer-readable medium according to claim 11 wherein the embodied method also comprises:

a step (301) of summing together the multiply coded symbols of at least two interleaved data streams.

13. The computer-readable medium according to claim 11 or 12 wherein the embodied method also comprises;
a step (501) of determining the said complex number by maximizing the Euclidean distance between the multiplied coded symbols.

14. The computer-readable medium according to claim 11 or 12 wherein the embodied method also comprises;
a step (501) of determining the said complex number using a model of a propagation channel between a transmitter and a receiver.

15. The computer-readable medium according to claim 11 or 12 wherein the embodied method also comprises;
a step (501) of determining the said complex number using the following formula:

$$w_L = 1/2^{L-1}$$

where $W_L$ is the said complex number, L is an index of the data stream.

Figure 1

201     Interleaving dataset

202     Multiplied interleaved dataset

Figure 2

201 — Interleaving dataset

202 — Multiplied interleaved dataset

301 — Summation

Figure 3

Figure 4

201 Interleaving dataset

Determination
complexe numbers 501

202 Multiplied interleaved
dataset

301 Summation

Figure 5

Europäisches
Patentamt

European
Patent Office

Office européen
des brevets

**EUROPEAN SEARCH REPORT**

Application Number

EP 14 30 5863

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/195907 A1 (WANG SHU [US] ET AL) 23 August 2007 (2007-08-23) * figure 3 * * paragraphs [0041], [0042] * * paragraph [0057] - paragraph [0058] * * paragraph [0070] - paragraph [0075] * * paragraph [0089] * ----- | 1-3,5, 7-13,15 | INV. H04L1/00 H04L27/04 H04L27/36 H04L27/34 H04L5/04 H04L5/12 |
| A | US 2007/286238 A1 (WANG SHU [US] ET AL) 13 December 2007 (2007-12-13) * the whole document * ----- | 1-15 | ADD. H04L25/49 H04W52/00 |
| Y | US 2012/287801 A1 (WULICH DOV [IL] ET AL) 15 November 2012 (2012-11-15) * paragraphs [0013], [0059], [0060], [0073], [0102] * ----- | 4,6,14 | |
| X | PETER ADAM HOEHER ET AL: "Superposition modulation: myths and facts", IEEE COMMUNICATIONS MAGAZINE, IEEE SERVICE CENTER, PISCATAWAY, US, vol. 49, no. 12, 1 December 2011 (2011-12-01), pages 110-116, XP011388007, ISSN: 0163-6804, DOI: 10.1109/MCOM.2011.6094014 | 1,2,5, 7-12,15 | |
| | | | TECHNICAL FIELDS SEARCHED (IPC) |
| | | | H04L H04W |
| Y | * the whole document * ----- | 4,6,14 | |

The present search report has been drawn up for all claims

| Place of search | Date of completion of the search | Examiner |
|---|---|---|
| Munich | 8 December 2014 | Stolte, Norbert |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT**
**ON EUROPEAN PATENT APPLICATION NO.**                    EP 14 30 5863

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-2014

| Patent document cited in search report | | Publication date | Patent family member(s) | | Publication date |
|---|---|---|---|---|---|
| US 2007195907 | A1 | 23-08-2007 | CN | 101444060 A | 27-05-2009 |
| | | | EP | 1987603 A2 | 05-11-2008 |
| | | | JP | 4777440 B2 | 21-09-2011 |
| | | | JP | 2009525665 A | 09-07-2009 |
| | | | KR | 20080089493 A | 06-10-2008 |
| | | | US | 2007195907 A1 | 23-08-2007 |
| | | | WO | 2007089110 A2 | 09-08-2007 |
| US 2007286238 | A1 | 13-12-2007 | CN | 101558611 A | 14-10-2009 |
| | | | EP | 2020158 A2 | 04-02-2009 |
| | | | JP | 5037605 B2 | 03-10-2012 |
| | | | JP | 2009538547 A | 05-11-2009 |
| | | | KR | 20080108320 A | 12-12-2008 |
| | | | TW | 200805953 A | 16-01-2008 |
| | | | US | 2007286238 A1 | 13-12-2007 |
| | | | WO | 2007123366 A2 | 01-11-2007 |
| US 2012287801 | A1 | 15-11-2012 | CN | 102754368 A | 24-10-2012 |
| | | | EP | 2497210 A1 | 12-09-2012 |
| | | | US | 2012287801 A1 | 15-11-2012 |
| | | | WO | 2011055319 A1 | 12-05-2011 |

EPO FORM P0459